(19) Europäisches Patentamt
European Patent Office
Office européen des brevets

(11) **EP 4 525 281 A1**

(12) **EUROPEAN PATENT APPLICATION**

(43) Date of publication:
**19.03.2025 Bulletin 2025/12**

(21) Application number: **23196750.6**

(22) Date of filing: **12.09.2023**

(51) International Patent Classification (IPC):
**H02M 1/00** (2006.01)     **H02M 3/155** (2006.01)
**H02M 3/335** (2006.01)

(52) Cooperative Patent Classification (CPC):
**H02M 1/0054; H02M 1/0074; H02M 1/0095;
H02M 3/155; H02M 3/33573; H02M 3/33584**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Danfoss A/S
6430 Nordborg (DK)**

(72) Inventors:
• **HONKANEN, Jari
  53600 LAPPEENRANTA (FI)**
• **NUUTINEN, Pasi
  53600 LAPPEENRANTA (FI)**
• **SIIVO, Tapani
  53600 LAPPEENRANTA (FI)**

(74) Representative: **Väänänen, Janne Kalervo
Vanarix Oy
Laaksolahdentie 74
02730 Espoo (FI)**

(54) **A DUAL-ACTIVE-BRIDGE CONVERTER AND A METHOD FOR CONTROLLING THE SAME**

(57)     A dual-active-bridge converter comprises a first H-bridge (101) for producing first voltage pulses which are alternately positive and negative, a second H-bridge (102) for producing second voltage pulses which are alternately positive and negative, and a transformer (103) comprising a first winding (104) receiving the first voltage pulses and a second winding (105) receiving the second voltage pulses. A controller (106) of the converter changes temporal widths (T1, T2) of the first and second voltage pulses and a phase-shift between the first and second voltage pulses when there is a need to change a distribution of power losses between a core structure of the transformer and power electronic switches of the H-bridges. Thus, the power loss distribution can be optimized in different operational modes, and the power loss distribution can be changed in situations where a part of the converter is at a risk of overheating.

**Figure 1a**

EP 4 525 281 A1

**Description**

**Field of the disclosure**

The disclosure relates generally to converters for transferring electric power. More particularly, the disclosure relates to a dual-active-bridge "DAB" converter, to a method for controlling a dual-active-bridge converter, and to a computer program for controlling a dual-active-bridge converter.

**Background**

Dual-active-bridge "DAB" converters have been widely adopted in applications for bidirectional power transmission, such as an energy storage system where a battery is charged and discharged. A dual-active-bridge converter comprises two active H-bridges and a transformer to achieve a desired voltage transfer ratio and galvanic isolation between the H-bridges. Electric power transferred by a dual-active-bridge converter can be controlled for example with a phase-shift modulation where 2-level voltages are generated by the H-bridges so that voltage pulses on different sides of the transformer are phase-shifted. The electric power flows from the H-bridge producing leading voltage pulses to the H-bridge producing lagging voltage pulses. Another method to control the electric power is a triangular modulation where 3-level voltages are generated by the H-bridges so that beginnings of the voltage pulses on primary and secondary sides are aligned, and the secondary side H-bridge is switched off as soon as current reaches zero. A third method to control the electric power is a trapezoidal modulation where 3-level voltages are generated by the H-bridges so that voltage pulses on different sides of the transformer are phase-shifted.

A dual-active-bridge converter comprises many elements in which power losses take place. The power losses take place for example in a ferromagnetic core structure of the transformer, in electric conductors such as windings of the transformer, and in power electronic switches of the H-bridges. The power losses in the ferromagnetic core structure are hysteresis and eddy current losses in the ferromagnetic material of the ferromagnetic core structure, the power losses in the electric conductors are resistive losses, and the power losses in the power electronic switches are switching and conduction losses. In many situations, there is a need to control a distribution of total power losses between the above-mentioned elements of a dual-active-bridge converter so that none of the elements gets overheated. Furthermore, there can be a need to change the distribution of the total power losses when an operational mode of a dual-active-bridge converter is changed between for example a cyclical operational mode and a continuous operational mode.

**Summary**

The following presents a simplified summary to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying and non-limiting embodiments.

In accordance with the invention, there is provided a new dual-active-bridge "DAB" converter that comprises:

- a first H-bridge configured to produce first voltage pulses which are alternately positive and negative,

- a second H-bridge configured to produce second voltage pulses which are alternately positive and negative,

- a transformer comprising a first winding configured to receive the first voltage pulses and a second winding configured to receive the second voltage pulses, and

- a controller configured to receive one or more control signals and to control the first and second H-bridges in accordance with the one or more control signals.

The controller is configured to:

- decrease a temporal width of the first voltage pulses and a temporal width of the second voltage pulses and increase a phase-shift between the first and second voltage pulses to transfer power losses from a core structure of the transformer to power electronic switches of the first and second H-bridges in response to a situation in which the one or more control signals fulfill a first predetermined condition, and

- increase the temporal width of the first voltage pulses and the temporal width of the second voltage pulses and decrease the phase-shift between the first and second voltage pulses to transfer power losses from the power electronic switches of the first and second H-bridges to the core structure of the transformer in response to a situation in which the one or more control signals fulfill a second predetermined condition.

The temporal widths of the first and second voltage pulses and the phase-shift between the first and second voltage pulses can be changed for example when there is a need, or it is at least advantageous, to change a distribution of power losses between the core structure of the transformer and the power electronic switches of the H-bridges. Thus, the power loss distribution can be optimized in different operational modes, such as a continuous use and a cyclic use, and the power loss distribution can be changed in situations where a part of the converter is at a risk of overheating.

In accordance with the invention, there is also provided a new method for controlling a dual-active-bridge converter that comprises:

-    a first H-bridge configured to produce first voltage pulses which are alternately positive and negative,

-    a second H-bridge configured to produce second voltage pulses which are alternately positive and negative, and

-    a transformer comprising a first winding configured to receive the first voltage pulses and a second winding configured to receive the second voltage pulses.

The method according to the invention comprises:

-    decreasing a temporal width of the first voltage pulses and a temporal width of the second voltage pulses and increasing a phase-shift between the first and second voltage pulses in response to a need to transfer power losses from a core structure of the transformer to power electronic switches of the first and second H-bridges, and

-    increasing the temporal width of the first voltage pulses and the temporal width of the second voltage pulses and decreasing the phase-shift between the first and second voltage pulses in response to a need to transfer power losses from the power electronic switches of the first and second H-bridges to the core structure of the transformer.

In accordance with the invention, there is also provided a new computer program for controlling a dual-active-bridge converter that comprises:

-    a first H-bridge configured to produce first voltage pulses which are alternately positive and negative,

-    a second H-bridge configured to produce second voltage pulses which are alternately positive and negative,

-    a transformer comprising a first winding configured to receive the first voltage pulses and a second winding configured to receive the second voltage pulses, and

-    a programmable data processor configured to receive one or more control signals and to control the first and second H-bridges in accordance with the one or more control signals.

The computer program according to the invention comprises computer executable instructions for controlling the programmable data processor to:

-    decrease a temporal width of the first voltage pulses and a temporal width of the second voltage pulses and increase a phase-shift between the first and second voltage pulses to transfer power losses from a core structure of the transformer to power electronic switches of the first and second H-bridges in response to a situation in which the one or more control signals fulfill a first predetermined condition, and

-    increase the temporal width of the first voltage pulses and the temporal width of the second voltage pulses and decrease the phase-shift between the first and second voltage pulses to transfer power losses from the power electronic switches of the first and second H-bridges to the core structure of the transformer in response to a situation in which the one or more control signals fulfill a second predetermined condition.

In accordance with the invention, there is also provided a new non-volatile computer readable medium, e.g. a compact disc "CD", that is encoded with a computer program according to the invention.
Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features.

The features recited in dependent claims are mutually freely combinable unless otherwise explicitly stated.

Furthermore, it is to be understood that the use of "a" or "an", i.e. a singular form, throughout this document does not exclude a plurality.

**Brief description of the figures**

Exemplifying and non-limiting embodiments and their advantages are explained in greater detail below in the sense of examples and with reference to the accompanying drawings, in which:

figure 1a shows a schematic illustration of a dual-active-bridge converter according to an exemplifying and non-limiting embodiment,

figures 1b, 1c, 1d, and 1e show exemplifying waveforms of voltages of a transformer of the dual-active-bridge converter illustrated in figure 1a, and

figure 2 shows a flowchart of a method according to an exemplifying and non-limiting embodiment for controlling a dual-active-bridge converter.

**Description of the exemplifying embodiments**

The specific examples provided in the description given below should not be construed as limiting the scope and/or the applicability of the appended claims. Lists and groups of examples provided in the description given below are not exhaustive unless otherwise explicitly stated.

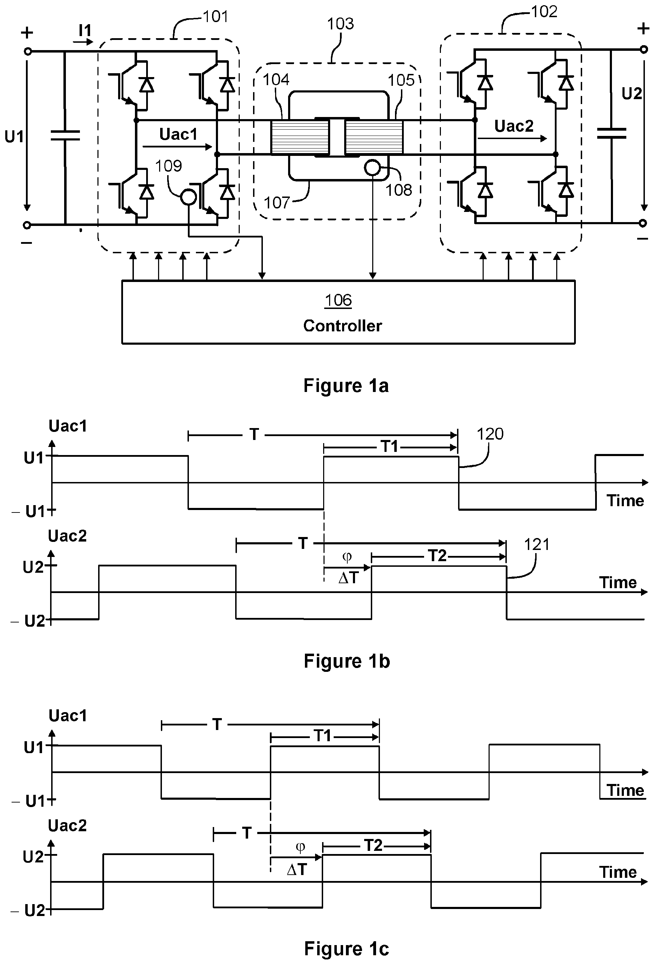

Figure 1a shows a schematic illustration of a dual-active-bridge "DAB" converter according to an exemplifying and non-limiting embodiment. The dual-active-bridge converter comprises a first H-bridge 101 that is configured to produce first voltage pulses which are alternately positive and negative. The dual-active-bridge converter comprises a second H-bridge 102 configured to produce second voltage pulses which are alternately positive and negative. The dual-active-bridge converter comprises a transformer 103 that comprises a first winding 104 configured to receive the first voltage pulses and a second winding 105 configured to receive the second voltage pulses. Figure 1b shows exemplifying waveforms of voltages Uac1 and Uac2 of the transformer 103. In figure 1b, one of the first voltage pulses is denoted with a reference 120 and one of the second voltage pulses is denoted with a reference 121. The dual-active-bridge converter comprises a controller 106 configured to receive one or more control signals and to control the first and second H-bridges in accordance with the one or more control signals.

The controller 106 is configured to decrease a temporal width T1 of the first voltage pulses and a temporal width T2 of the second voltage pulses, and to increase a phase-shift φ between the first and second voltage pulses when there is a need to transfer power losses from a core structure 107 of the transformer 103 to power electronic switches of the first and second H-bridges. A need to transfer power losses from the core structure 107 to the power electronic switches is indicated so that one or more of the one or more control signals received by the controller 106 fulfill a first predetermined condition. The exemplifying dual-active-bridge converter illustrated in figure 1a comprises a first temperature sensor 108 configured to measure temperature of the core structure 107 and to produce a first temperature signal that is one of the above-mentioned one or more control signals. In this exemplifying case, the need to transfer power losses from the core structure 107 to the power electronic switches can be indicated for example so that the temperature of the core structure 107 exceeds a first limit value.

Figure 1c shows exemplifying waveforms of the voltages Uac1 and Uac2 of the transformer 103 after the temporal widths T1 and T2 have been decreased and the phase-shift φ has been increased compared to the situation shown in figure 1b. The decrease in the temporal widths T1 and T2 decreases a range of variation, i.e. a swing, of a magnetic flux in the core structure 107 and thereby decreases losses in the core structure 107. On the other hand, the decrease in the temporal widths T1 and T2 increases switching frequencies of the power electronic switches of the H-bridges and thereby increases losses in the power electronic switches.

In both the situations illustrated in figures 1b and 1c, the electric power flows from the H-bridge 101 producing the leading first voltage pulses to the H-bridge 102 producing the lagging second voltage pulses. The power transfer can be elucidated by considering fundamental wave components of the voltages Uac1 and Uac2 constituted by the first and second voltage pulses. The power $P_1$ transferred by these fundamental wave components can be approximated as:

$$P_1 = \tfrac{1}{2}\hat{U}ac1_1\,\hat{U}ac2_1\,\sin(\varphi)\,/\,X, \tag{1}$$

where $\hat{U}ac1_1$ and $\hat{U}ac2_1$ are amplitudes of the above-mentioned fundamental wave components and X is a stray reactance of the transformer 103. When frequency of the fundamental wave components is increased i.e. a cycle length T of the voltages Uac1 and Uac2 is decreased, the stray reactance X increases as being proportional to the frequency. Thus, the phase-shift $\varphi$ needs to be increased to maintain the power transfer. It is to be noted that the phase-shift $\varphi$ is an angle that is e.g. in radians:

$$\varphi = 2\pi\,\Delta T/T, \tag{2}$$

where $\Delta T$ is a time shift between the first and second voltage pulses and T is the cycle length of the voltages Uac1 and Uac2 constituted by the first and second voltage pulses.

The controller 106 is configured to increase the temporal width T1 of the first voltage pulses and the temporal width T2 of the second voltage pulses, and to decrease the phase-shift $\varphi$ between the first and second voltage pulses when there is a need to transfer power losses from the power electronic switches to the core structure 107. The need to transfer power losses from the power electronic switches to the core structure 107 is indicated so that one or more of the one or more control signals received by the controller 106 fulfill a second predetermined condition. The exemplifying dual-active-bridge converter illustrated in figure 1a comprises a second temperature sensor 109 configured to measure temperature of one of the power electronic switches and to produce a second temperature signal that is one of the above-mentioned one or more control signals. In this exemplifying case, the need to transfer power losses from the power electronic switches to the core structure 107 can be indicated for example so that the second temperature signal exceeds a second limit value.

The increase in the temporal widths T1 and T2 increases the range of variation, i.e. the swing, of the magnetic flux in the core structure 107 and thereby the increase in the temporal widths T1 and T2 increases the losses in the core structure 107. On the other hand, the increase in the temporal widths T1 and T2 decreases the switching frequencies of the power electronic switches of the H-bridges and thereby the increase in the temporal widths T1 and T2 decreases the losses in the power electronic switches.

In a dual-active-bridge converter according to an exemplifying and non-limiting embodiment, one control signal received by the controller 106 is indicative of electric power $P = U1 \times I1$ transferred by the dual-active-bridge converter. The controller 106 is configured to decrease the temporal widths T1 and T2 of the first and second voltage pulses and increase the phase-shift $\varphi$ between the first and second voltage pulses in response to a situation in which the electric power has decreased and, correspondingly, increase the temporal widths T1 and T2 and decrease the phase-shift $\varphi$ in response to a situation in which the electric power P has increased. The increase in the electric power P increases electric currents and thereby increases conduction losses in the power electronic switches and in electric conductors. The increase in the temporal widths T1 and T2 transfers power losses from the power electronic switches to the core structure 107 because the switching frequencies of the power electronic switches decrease and the range of variation of the magnetic flux in the core structure 107 increases. Thus, a part of additional losses caused by the increase in the electric power P is transferred from the power electronic switches to the core structure 107.

Figures 1b and 1c illustrate an exemplifying situation where the first H-bridge 101 produces a first 2-level voltage so that positive ones of the first voltage pulses constitute positive half cycles and negative ones of the first voltage pulses constitute negative half cycles, and the second H-bridge 102 produces a second 2-level voltage so that positive ones of the second voltage pulses constitute positive half cycles and negative ones of the second voltage pulses constitute negative half cycles. In this exemplifying case, the temporal widths T1 and T2 are the same because the frequencies of the voltages Uac1 and Uac2 must be the same to enable power transfer by fundamental wave components of the voltages Uac1 and Uac2.

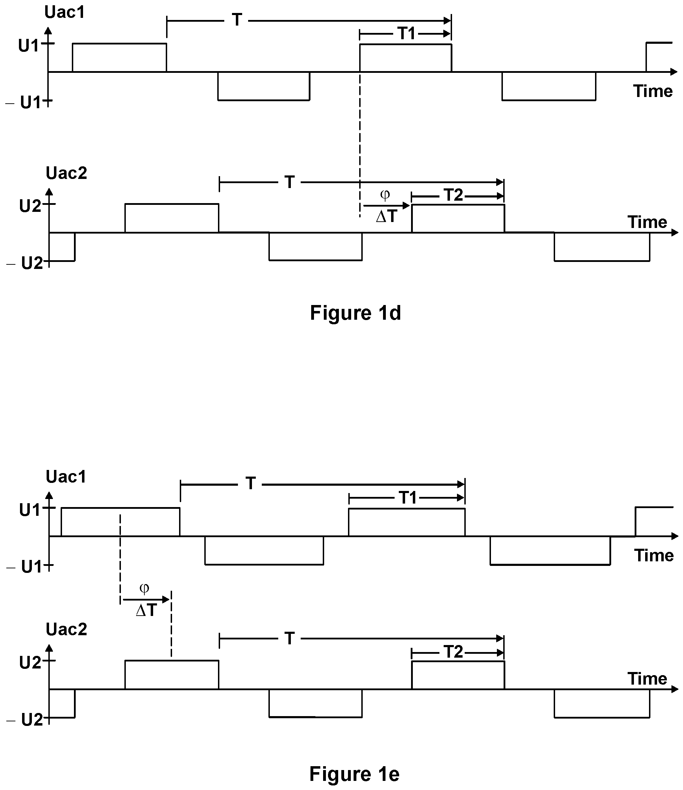

Figures 1d and 1e show exemplifying waveforms of the voltages of the transformer 103 in exemplifying situations where the first H-bridge 101 produces a first 3-level voltage so that zero voltage periods are between the first voltage pulses being alternately positive and negative, and the second H-bridge 102 produces a second 3-level voltage so that zero voltage periods are between the second voltage pulses being alternately positive and negative. The zero voltage periods in each winding of the transformer 103 are realized by switching both ends of the winding to a positive voltage rail of the H-bridge connected to the winding or to a negative voltage rail of the H-bridge.

Figure 1d shows an exemplifying situation in which the temporal widths T1 and T2 are the same, and figure 1e shows another exemplifying situation in which the temporal widths T1 and T2 differ from each other. In both situations shown in figures 1d and 1e, the cycle length T is the same for both the voltages Uac1 and Uac2 to enable power transfer by fundamental wave components of the voltages Uac1 and Uac2. In a dual-active-bridge converter according to an exemplifying and non-limiting embodiment, the controller 106 is configured to keep a ratio of the temporal widths T1/T2 constant when changing the temporal widths T1 and T2. In a dual-active-bridge converter according to an exemplifying and non-limiting embodiment, the controller 106 is configured to keep the cycle length T constant when changing the temporal widths T1 and T2. It is to be noted that many ways to control the voltages Uac1 and Uac2 can be used to change the loss distribution within the dual-active-bridge converter while maintaining desired power transfer. The above-mentioned ways to control the voltages Uac1 and Uac2 are non-limiting examples only.

In the exemplifying dual-active-bridge converter illustrated in figure 1a, the first and second H-bridges are full H-bridges. It is also possible that the H-bridges of a dual-active-bridge converter according to an embodiment are half H-bridges. Furthermore, it is also possible that the H-bridges are neutral point clamped "NPC" H-bridges. In the exemplifying dual-active-bridge converter illustrated in figure 1a, the first and second H-bridges 101 and 102 are implemented with insulated gate bipolar transistors "IGBT". It is however also possible that the H-bridges comprises e.g. a gate turn-off thyristor "GTO", a metal oxide field effect transistor "MOSFET", or some other suitable semiconductor switch in lieu of each IGBT.

The implementation of the controller 106 can be based on one or more analogue circuits, one or more digital processing circuits, or a combination thereof. Each digital processing circuit can be a programmable processor circuit provided with appropriate software, a dedicated hardware processor such as for example an application specific integrated circuit "ASIC", or a configurable hardware processor such as for example a field programmable gate array "FPGA". Furthermore, controller 106 may comprise one or more memory circuits each of which can be for example a random-access memory "RAM" circuit.

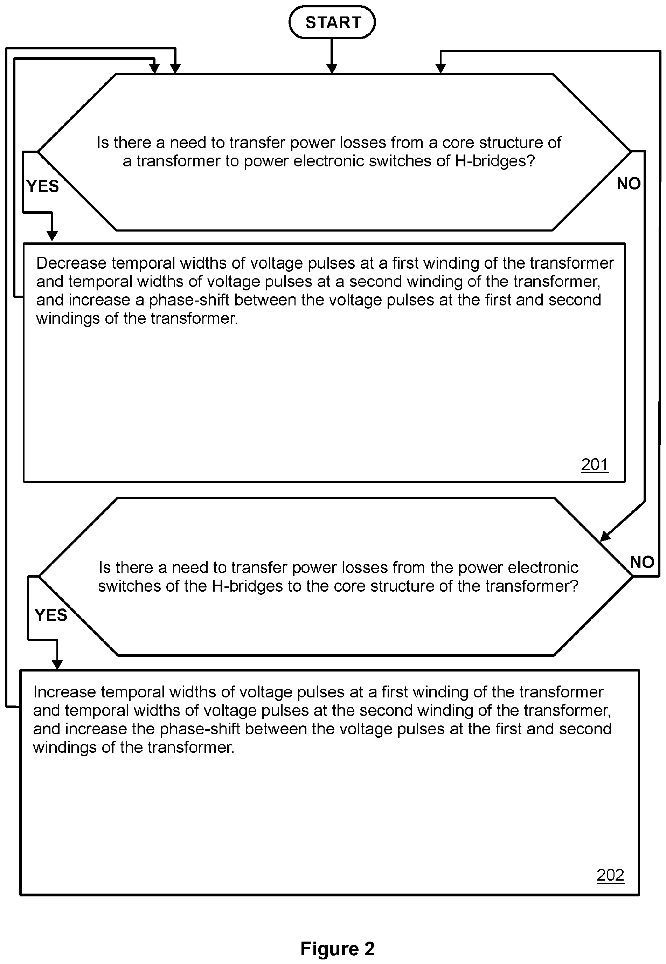

Figure 2 shows a flowchart of a method according to an exemplifying and non-limiting embodiment for controlling a dual-active-bridge converter that comprises:

- a first H-bridge configured to produce first voltage pulses which are alternately positive and negative,

- a second H-bridge configured to produce second voltage pulses which are alternately positive and negative, and

- a transformer comprising a first winding configured to receive the first voltage pulses and a second winding configured to receive the second voltage pulses.

The method comprises the following actions:

- action 201: decreasing a temporal width of the first voltage pulses and a temporal width of the second voltage pulses and increasing a phase-shift between the first and second voltage pulses in response to a need to transfer power losses from a core structure of the transformer to power electronic switches of the first and second H-bridges, and

- action 202: increasing the temporal width of the first voltage pulses and the temporal width of the second voltage pulses and decreasing the phase-shift between the first and second voltage pulses in response to a need to transfer power losses from the power electronic switches of the first and second H-bridges to the core structure of the transformer.

A method according to an exemplifying and non-limiting embodiment comprises measuring temperature of the core structure of the transformer. The temporal widths of the first and second voltage pulses are decreased and the phase-shift between the first and second voltage pulses is increased in response to a situation in which the measured temperature of the core structure of the transformer exceeds a first limit value.

A method according to an exemplifying and non-limiting embodiment comprises measuring temperature of at least one of the power electronic switches of the first and second H-bridges. The temporal widths of the first and second voltage pulses are increased and the phase-shift between the first and second voltage pulses is decreased in response to a situation in which the measured temperature of the at least one of the power electronic switches exceeds a second limit value.

In a method according to an exemplifying and non-limiting embodiment, the temporal widths of the first and second voltage pulses are decreased and the phase-shift between the first and second voltage pulses is increased in response to a situation in which electric power transferred by the dual-active-bridge converter has decreased. Correspondingly, the temporal widths of the first and second voltage pulses are increased and the phase-shift between the first and second voltage pulses is decreased in response to a situation in which the electric power has increased. In this exemplifying case, a part of additional losses caused by the increase in the electric power are transferred from the power electronic switches to the core structure.

In a method according to an exemplifying and non-limiting embodiment, there are zero voltage periods between positive and negative first voltage pulses and between positive and negative second voltage pulses. The alternately positive and negative first voltage pulses and the zero voltage periods between the first voltage pulses constitute a first 3-level voltage, and the alternately positive and negative second voltage pulses and the zero voltage periods between the second voltage pulses constitute a second 3-level voltage A method according to an exemplifying and non-limiting embodiment comprises keeping a ratio of the temporal widths of the first and second voltage pulses constant when changing the temporal widths of the first and second voltage pulses. A method according to an exemplifying and non-limiting embodiment comprises keeping a cycle length of the first and second 3-level voltages constant when changing the temporal widths of the first and second voltage pulses.

A computer program according to an exemplifying and non-limiting embodiment comprises computer executable instructions for controlling a programmable data processor to carry out actions related to a method according to any of the above-described exemplifying and non-limiting embodiments.

A computer program according to an exemplifying and non-limiting embodiment comprises software modules for controlling a dual-active-bridge converter that comprises:

- a first H-bridge configured to produce first voltage pulses which are alternately positive and negative,

- a second H-bridge configured to produce second voltage pulses which are alternately positive and negative,

- a transformer comprising a first winding configured to receive the first voltage pulses and a second winding configured to receive the second voltage pulses, and

- a programmable data processor configured to receive one or more control signals and to control the first and second H-bridges in accordance with the one or more control signals.

The software modules comprise computer executable instructions for controlling the programmable data processor to:

- decrease a temporal width of the first voltage pulses and a temporal width of the second voltage pulses and increase a phase-shift between the first and second voltage pulses to transfer power losses from a core structure of the transformer to power electronic switches of the first and second H-bridges in response to a situation in which the one or more control signals fulfill a first predetermined condition, and

- increase the temporal width of the first voltage pulses and the temporal width of the second voltage pulses and decrease the phase-shift between the first and second voltage pulses to transfer power losses from the power electronic switches of the first and second H-bridges to the core structure of the transformer in response to a situation in which the one or more control signals fulfill a second predetermined condition.

The software modules can be for example subroutines or functions implemented with programming tools suitable for the programmable data processor.

A computer program product according to an exemplifying and non-limiting embodiment comprises a computer readable medium, e.g. a compact disc "CD", encoded with a computer program according to an exemplifying embodiment of the invention.

A signal according to an exemplifying and non-limiting embodiment is encoded to carry information defining a computer program according to an exemplifying embodiment of the invention.

The specific examples provided in the description given above should not be construed as limiting the applicability and/or the interpretation of the appended claims. Lists and groups of examples provided in the description given above are not exhaustive unless otherwise explicitly stated.

**Claims**

1.   A dual-active-bridge converter comprising:

- a first H-bridge (101) configured to produce first voltage pulses which are alternately positive and negative,
- a second H-bridge (102) configured to produce second voltage pulses which are alternately positive and negative,
- a transformer (103) comprising a first winding (104) configured to receive the first voltage pulses and a second winding (105) configured to receive the second voltage pulses, and
- a controller (106) configured to receive one or more control signals and to control the first and second H-bridges in accordance with the one or more control signals,

**characterized in that** the controller (106) is configured to:

- decrease a temporal width (T1) of the first voltage pulses and a temporal width (T2) of the second voltage pulses and increase a phase-shift between the first and second voltage pulses to transfer power losses from a core structure (107) of the transformer to power electronic switches of the first and second H-bridges in response to a situation in which the one or more control signals fulfill a first predetermined condition, and

- increase the temporal width (T1) of the first voltage pulses and the temporal width (T2) of the second voltage pulses and decrease the phase-shift between the first and second voltage pulses to transfer power losses from the power electronic switches of the first and second H-bridges to the core structure of the transformer in response to a situation in which the one or more control signals fulfill a second predetermined condition.

2. A dual-active-bridge converter according to claim 1, wherein the dual-active-bridge converter comprises a first temperature sensor (108) configured to measure temperature of the core structure of the transformer and to produce a first temperature signal being one of the one or more control signals, and the controller is configured to decrease the temporal widths (T1, T2) of the first and second voltage pulses and increase the phase-shift between the first and second voltage pulses in response to a situation in which the first temperature signal indicates that the temperature of the core structure of the transformer exceeds a first limit value.

3. A dual-active-bridge converter according to claim 1 or 2, wherein the dual-active-bridge converter comprises a second temperature sensor (109) configured to measure temperature of at least one of the power electronic switches of the first and second H-bridges and to produce a second temperature signal being one of the one or more control signals, and the controller is configured to increase the temporal widths (T1, T2) of the first and second voltage pulses and decrease the phase-shift between the first and second voltage pulses in response to a situation in which the second temperature signal indicates that the temperature of the at least one of the power electronic switches exceeds a second limit value.

4. A dual-active-bridge converter according to any one of claims 1-3, wherein one of the one or more control signals is indicative of electric power transferred by the dual-active-bridge converter, and the controller is configured to decrease the temporal widths (T1, T2) of the first and second voltage pulses and increase the phase-shift between the first and second voltage pulses in response to a situation in which the electric power has decreased and increase the temporal widths (T1, T2) of the first and second voltage pulses and decrease the phase-shift between the first and second voltage pulses in response to a situation in which the electric power has increased.

5. A dual-active-bridge converter according to any one of claims 1-4, wherein the first H-bridge is configured to produce a first 2-level voltage so that positive ones of the first voltage pulses constitute positive half cycles and negative ones of the first voltage pulses constitute negative half cycles, and the second H-bridge is configured to produce a second 2-level voltage so that positive ones of the second voltage pulses constitute positive half cycles and negative ones of the second voltage pulses constitute negative half cycles.

6. A dual-active-bridge converter according to any one of claims 1-4, wherein the first H-bridge is configured to produce a first 3-level voltage so that zero voltage periods are between the first voltage pulses being alternately positive and negative, and the second H-bridge is configured to produce a second 3-level voltage so that zero voltage periods are between the second voltage pulses being alternately positive and negative.

7. A dual-active-bridge converter according to claim 6, wherein the controller is configured to keep a ratio of the temporal widths (T1, T2) of the first and second voltage pulses constant when changing the temporal widths (T1, T2) of the first and second voltage pulses.

8. A dual-active-bridge converter according to claim 6 or 7, wherein the controller is configured to keep a cycle length (T) of the first and second 3-level voltages constant when changing the temporal widths (T1, T2) of the first and second voltage pulses.

9. A method for controlling a dual-active-bridge converter that comprises:

- a first H-bridge configured to produce first voltage pulses which are alternately positive and negative,
- a second H-bridge configured to produce second voltage pulses which are alternately positive and negative, and
- a transformer comprising a first winding configured to receive the first voltage pulses and a second winding configured to receive the second voltage pulses,

**characterized in that** the method comprises:

- decreasing (201) a temporal width (T1) of the first voltage pulses and a temporal width (T2) of the second voltage pulses and increasing (201) a phase-shift between the first and second voltage pulses in response to a need to transfer power losses from a core structure of the transformer to power electronic switches of the first and second H-bridges, and

- increasing (202) the temporal width (T1) of the first voltage pulses and the temporal width (T2) of the second voltage pulses and decreasing (202) the phase-shift between the first and second voltage pulses in response to a need to transfer power losses from the power electronic switches of the first and second H-bridges to the core structure of the transformer.

10. A method according to claim 9, wherein the method comprises measuring temperature of the core structure of the transformer, and the temporal widths (T1, T2) of the first and second voltage pulses are decreased and the phase-shift between the first and second voltage pulses is increased in response to a situation in which the measured temperature of the core structure of the transformer exceeds a first limit value.

11. A method according to claim 9 or 10, wherein the method comprises measuring temperature of at least one of the power electronic switches of the first and second H-bridges, and the temporal widths (T1, T2) of the first and second voltage pulses are increased and the phase-shift between the first and second voltage pulses is decreased in response to a situation in which the measured temperature of the at least one of the power electronic switches exceeds a second limit value.

12. A method according to any one of claims 9-11, wherein the temporal widths (T1, T2) of the first and second voltage pulses are decreased and the phase-shift between the first and second voltage pulses is increased in response to a situation in which electric power transferred by the dual-active-bridge converter has decreased, and the temporal widths (T1, T2) of the first and second voltage pulses are increased and the phase-shift between the first and second voltage pulses is decreased in response to a situation in which the electric power has increased.

13. A method according to any one of claims 9-12, wherein the alternately positive and negative first voltage pulses and zero voltage periods between the first voltage pulses constitute a first 3-level voltage, the alternately positive and negative second voltage pulses and zero voltage periods between the second voltage pulses constitute a second 3-level voltage, and the method comprises keeping a ratio of the temporal widths (T1, T2) of the first and second voltage pulses constant when changing the temporal widths (T1, T2) of the first and second voltage pulses.

14. A method according to any one of claims 9-13, wherein the alternately positive and negative first voltage pulses and zero voltage periods between the first voltage pulses constitute a first 3-level voltage, the alternately positive and negative second voltage pulses and zero voltage periods between the second voltage pulses constitute a second 3-level voltage, and the method comprises keeping a cycle length (T) of the first and second 3-level voltages constant when changing the temporal widths (T1, T2) of the first and second voltage pulses.

15. A computer program for controlling a dual-active-bridge converter that comprises:

- a first H-bridge configured to produce first voltage pulses which are alternately positive and negative,
- a second H-bridge configured to produce second voltage pulses which are alternately positive and negative,
- a transformer comprising a first winding configured to receive the first voltage pulses and a second winding configured to receive the second voltage pulses, and
- a programmable data processor configured to receive one or more control signals and to control the first and second H-bridges in accordance with the one or more control signals,

**characterized in that** the computer program comprises computer executable instructions for controlling the programmable data processor to:

- decrease a temporal width (T1) of the first voltage pulses and a temporal width (T2) of the second voltage pulses and increase a phase-shift between the first and second voltage pulses to transfer power losses from a core structure of the transformer to power electronic switches of the first and second H-bridges in response to a situation in which the one or more control signals fulfill a first predetermined condition, and

- increase the temporal width (T1) of the first voltage pulses and the temporal width (T2) of the second voltage pulses and decrease the phase-shift between the first and second voltage pulses to transfer power losses from the power electronic switches of the first and second H-bridges to the core structure of the transformer in response to a situation in which the one or more control signals fulfill a second predetermined condition.

**Figure 1a**

**Figure 1b**

**Figure 1c**

**Figure 1d**

**Figure 1e**

START

Is there a need to transfer power losses from a core structure of a transformer to power electronic switches of H-bridges?

YES NO

Decrease temporal widths of voltage pulses at a first winding of the transformer and temporal widths of voltage pulses at a second winding of the transformer, and increase a phase-shift between the voltage pulses at the first and second windings of the transformer.

201

Is there a need to transfer power losses from the power electronic switches of the H-bridges to the core structure of the transformer?

YES NO

Increase temporal widths of voltage pulses at a first winding of the transformer and temporal widths of voltage pulses at the second winding of the transformer, and increase the phase-shift between the voltage pulses at the first and second windings of the transformer.

202

**Figure 2**

Europäisches
Patentamt

European
Patent Office

Office européen
des brevets

# EUROPEAN SEARCH REPORT

**Application Number**

EP 23 19 6750

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIN YANXIANG ET AL: "An Online Efficiency Optimization Strategy Based on Variable-Frequency Phase-Shift Modulation for Dual-Active-Bridge Converters", 2023 11TH INTERNATIONAL CONFERENCE ON POWER ELECTRONICS AND ECCE ASIA (ICPE 2023 - ECCE ASIA), THE KOREAN INSTITUTE OF POWER ELECTRONICS, 22 May 2023 (2023-05-22), pages 2892-2897, XP034403411, DOI: 10.23919/ICPE2023-ECCEASIA54778.2023.10213535 [retrieved on 2023-08-22] | 1,4-9, 12,13,15 | INV. H02M1/00 H02M3/155 H02M3/335 |
| A | * page 2893 - page 2895; figures 1-6 * | 2,3,10, 11 | |
| A | US 2011/249472 A1 (JAIN AMIT KUMAR [US] ET AL) 13 October 2011 (2011-10-13) * paragraphs [0005], [0025] - [0027], [0044] - [0045]; figures 1,2,5 * | 1-15 | |
| | | | TECHNICAL FIELDS SEARCHED (IPC) |
| A | LEIBL MICHAEL ET AL: "Design and Experimental Analysis of a Medium-Frequency Transformer for Solid-State Transformer Applications", IEEE JOURNAL OF EMERGING AND SELECTED TOPICS IN POWER ELECTRONICS, IEEE, PISCATAWAY, NJ, USA, vol. 5, no. 1, 1 March 2017 (2017-03-01), pages 110-123, XP011640148, ISSN: 2168-6777, DOI: 10.1109/JESTPE.2016.2623679 [retrieved on 2017-01-31] * page 118; figure 1 * | 1-15 | H02M |

The present search report has been drawn up for all claims

| Place of search | Date of completion of the search | Examiner |
|---|---|---|
| The Hague | 29 February 2024 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 6750

This annex lists the patent family members relating to the patent documents cited in the above-mentioned European search report.
The members are as contained in the European Patent Office EDP file on
The European Patent Office is in no way liable for these particulars which are merely given for the purpose of information.

29-02-2024

| Patent document cited in search report | Publication date | Patent family member(s) | Publication date |
|---|---|---|---|
| US 2011249472 A1 | 13-10-2011 | NONE | |

EPO FORM P0459

For more details about this annex : see Official Journal of the European Patent Office, No. 12/82